# EUROPÄISCHE PATENTANMELDUNG

(11) **EP 2 309 230 A1**
(43) Veröffentlichungstag der Anmeldung: **13.04.2011**
(21) Anmeldenummer: 09012871.1
(22) Anmeldetag: 12.10.2009
(51) Int. Cl.: G01D 5/244

(54) **Positionsgebervorrichtung mit Energiesparmodus**

(71) Anmelder: Baumer Innotec AG, 8500 Frauenfeld (CH)
(72) Erfinder: Schneider, Michael, 78462 Konstanz (DE); Hohl, Michael, 8405 Winterthur (CH)
(74) Vertreter: Grünecker, Kinkeldey, Stockmair & Schwanhäusser Anwaltssozietät

(57) **Zusammenfassung**

Die vorliegende Erfindung betrifft eine Messvorrichtung zur Ermittlung der Position und/oder des Drehwinkels eines Körpers, der eine Translations- und/oder Rotationsbewegung ausführt, und die sich in einem Energiesparmodus oder einem Betriebsmodus befinden kann, die eine externe Energieversorgung, zumindest einen ersten Positionssensor, der in dem Energiesparmodus von der externen Energieversorgung versorgt wird und der dazu ausgebildet ist, in dem Energiesparmodus in Reaktion auf eine Detektion einer Positionsänderung und/oder Drehung des Körpers ein Signal auszugeben, zumindest einen zweiten Positionssensor mit höherem Auflösungsvermögen und Energieverbrauch als demjenigen des zumindest einen ersten Positionssensors und eine Auswerteeinheit zum Auswerten von Signalen des zumindest einen zweiten Positionssensors und wobei der zweite Positionssensor und, zumindest teilweise, die Auswerteeinheit im Energiesparmodus nicht von der externen Energieversorgung versorgt werden und eine Weckvorrichtung, die dazu ausgebildet ist, das von dem zumindest einen ersten Positionssensor ausgegebene Signal zu empfangen und in Reaktion darauf ein Wecksignal auszugeben, das zu einem Schalten der Messvorrichtung von dem Energiesparmodus in den Betriebsmodus führt, in dem der zumindest eine zweite Positionssensor und die gesamte Auswerteeinheit durch die externe Energieversorgung mit Energie versorgt werden, umfasst.

## Beschreibung

### Gebiet der Erfindung

Die vorliegende Erfindung betrifft eine Positionsgebervorrichtung zur Bestimmung einer Position oder eines Drehwinkels eines Körpers, der eine Translations- und/oder Rotationsbewegung ausführt.

### Hintergrund der Erfindung

Messvorrichtungen wie Positions- bzw. Drehgebervorrichtungen finden allgemein zur Überwachung und Steuerung mechanischer Bewegungsabläufe Anwendung. Beispielsweise werden Drehgeber für die Drehzahlerfassung und Steuerung von Motoren, Steuerung oder Regelung von Förderanlagen oder die Überwachung von Förderbändern eingesetzt.

Für den Betrieb von Positionsgebern ist es in manchen Anwendungen wünschenswert, den Energieverbrauch des Positionsgebers selbst, und wenn möglich zusätzlich den Energieverbrauch einer externen Auswerteeinheit zu minimieren. Dies gilt insbesondere für Anwendungen, bei denen in manchen Betriebszuständen die Energie zeitweise von einer Batterie oder einem Akkumulator geliefert wird. Da in einem solchen Fall die Betriebsdauer des Systems aus Positionsgeber und Auswerteeinheit entscheidend vom Energieverbrauch des Systems abhängt, ist es wünschenswert, den Energieverbrauch zu minimieren. Dazu muss der Energieverbrauch sowohl des Positionsgebers als auch der Energieverbrauch der externen Auswerteeinheit minimiert werden. Dies gilt insbesondere für Betriebszustände, in denen keine Bewegung und damit keine Änderung der Position erfolgt, gleichzeitig aber beispielsweise auch keine Auswertung der Positionsinformationen erfolgen muss.

Die DE 42 29 610 A1 beschreibt einen Positionsgeber, der für den Fall der Abwesenheit einer externen Spannungsquelle über eine interne Energiequelle wie beispielsweise eine Batterie verfügt. Eine wesentliche Funktion des Positionsgebers besteht darin, Positionsänderungen auch in Abwesenheit der externen Spannungsquelle zu detektieren und abzuspeichern, damit nach einem Wiedereinschalten der externen Spannungsquelle sofort die korrekte Position verfügbar ist. Zur Senkung des Energieverbrauchs sind die zur Positionserfassung vorgesehenen Schaltelemente in Reihe mit einem hochohmigen Widerstand geschaltet. Schaltelemente und Mikrokontroller sind jedoch dauerhaft mit Strom/Spannung beaufschlagt, entweder von einer externen oder von einer internen Energiequelle.

Die DE 103 11 412 B3 beschreibt ebenfalls einen Positionsgeber, der für den Fall der Abwesenheit einer externen Spannungsquelle über eine interne Energiequelle wie beispielsweise eine Batterie verfügt. Der Energieverbrauch wird gezielt gesenkt, um eine möglichst lange Lebensdauer der Energiequelle zu gewährleisten. Massnahmen zu Senkung des Energieverbrauchs sind beispielsweise eine periodische Beaufschlagung der Sensorteile mit Strom/Spannung sowie ein Betrieb des vorgesehenen Mikrokontrollers im Energiesparmodus. Ein Aufwecken der Elektronik des Positionsgebers erfolgt beim Einschalten der externen Spannungsquelle.

Die im Stand der Technik vorgeschlagenen Maßnahmen zur Verringerung des Energieverbrauchs haben sich jedoch in der Praxis als nicht hinreichend erwiesen.

Es ist somit eine der vorliegenden Erfindung zugrunde liegende Aufgabe, eine Positionsgebervorrichtung, insbesondere eine Drehgebervorrichtung, zur Verfügung zu stellen, die einen gegenüber dem Stand der Technik verringerten Energieverbrauch unter Wahrung zuverlässiger Positions- bzw. Drehwinkelbestimmung aufweist.

### Beschreibung der Erfindung

Die oben genannte Aufgabe wird durch die Messvorrichtung zur Ermittlung der Position und/oder des Drehwinkels eines Körpers, der eine Translations- und/oder Rotationsbewegung ausführt, und die sich in einem Energiesparmodus oder einem Betriebsmodus befinden kann, gemäß Anspruch 1 gelöst. Die beanspruchte Messvorrichtung umfasst

### eine Energieversorgung;

zumindest einen ersten Positionssensor, der in dem Energiesparmodus von der Energieversorgung versorgt wird und der dazu ausgebildet ist, in dem Energiesparmodus in Reaktion auf eine Detektion einer Positionsänderung und/oder Drehung des Körpers ein Signal auszugeben;

zumindest einen zweiten Positionssensor mit höherem Auflösungsvermögen und Energieverbrauch als demjenigen des zumindest einen ersten Positionssensors und eine Auswerteeinheit zum Auswerten von Signalen des zumindest einen zweiten Positionssensors und wobei der zweite Positionssensor und, zumindest teilweise, die Auswerteeinheit im Energiesparmodus von der Energieversorgung getrennt sind (ausgeschaltet sind); und

eine Weckvorrichtung, die dazu ausgebildet ist, das von dem zumindest einen ersten Positionssensor ausgegebene Signal zu empfangen und in Reaktion darauf ein Wecksignal (Schaltsignal) auszugeben, das zu einem Schalten der Messvorrichtung von dem Energiesparmodus in den Betriebsmodus führt, in dem der zumindest eine zweite Positionssensor und die gesamte Auswerteeinheit durch die Energieversorgung mit Energie versorgt werden (d.h. eingeschaltet sind).

Hierbei und im weiteren versteht es sich, dass mit dem Ausdruck "Positionssensor" Sensoren zur Detektion einer linearen Bewegung eines Körpers und/oder zur Detektion einer Drehung eines Körpers, insbesondere einer Welle, umfasst sind. Der Begriff der Welle umfasst hierin eine drehbare, rein mechanisch oder elektrisch antreibbare Achse und ebenso allgemein einen jeglichen drehbaren geradlinigen, krummlinigen oder helischen Voll- oder Hohlkörper, deren oder dessen Drehwinkel von der Drehgebervorrichtung erfasst wird. Die Welle kann beispielsweise eine Hohlwelle oder Vollwelle sein.

Die Energieversorgung kann extern oder intern in Bezug auf die Messvorrichtung ausgebildet sein.

Vorteilhafterweise kann im Fall einer externen Energieversorgung die Messvorrichtung besonders klein ausgebildet werden. Ferner, ergibt sich durch eine externe Energieversorgung eine größere Flexibilität in Bezug auf die Anordnung der Messvorrichtung und der Energieversorgung.

Im Fall einer internen Energieversorgung kann diese vorteilhafterweise in Form einer Generatoreinrichtung vorgesehen werden, die insbesondere die mechanische Energie der rotierenden Welle in Elektrische Energie umwandelt.

Die Energieversorgung kann physikalisch außerhalb der Auswerteeinheit und der Positionsgebereinheit und mit diesen elektrisch verbunden vorgesehen sein. Insbesondere kann die Auswerteeinheit und/oder der zumindest eine zweite Positionssensor durch das Wecksignal angeschaltet werden, d.h. mit der Energieversorgung elektrisch verbunden werden.

Der zumindest eine erste Positionssensor kann einen Reed-Kontakt, einen Hall-Sensor, einen Wiegand-Draht oder einen optischen, induktiven oder kapazitiven Sensor umfassen, und der zumindest eine zweite Positionssensor kann einen magnetoresistiven, optischen, induktiven oder kapazitiven Sensor relativ hoher Auflösung umfassen.

Im Energiesparmodus wird weniger Energie als im Betriebsmodus verbraucht. Im Energiesparmodus sind bestimmte Bauteile der Messvorrichtung ausgeschaltet, werden in diesem Modus also nicht von der Energieversorgung versorgt. Im Betriebsmodus werden sämtliche Bauteile, die für einen zuverlässigen Betrieb der Messvorrichtung erforderlich sind durch die Energieversorgung mit elektrischer Energie versorgt. Insbesondere wird erfindungsgemäß der zumindest eine erste Positionssensor im Energiesparmodus zum Detektieren einer Positions-/Drehwinkeländerung des Körpers betrieben, während der zumindest eine zweite Positionssensor, dessen hochaufgelöste Daten der Auswerteeinheit zur Ermittlung von absoluten und/oder relativen (Winkel-)Positionen des Körpers zugeführt werden, der aber einen höheren Energieverbrauch als der zumindest eine erste Positionssensor aufweist, im Energiesparmodus ausgeschaltet und im Betriebsmodus eingeschaltet ist. Insbesondere kann in Reaktion auf das Wecksignal ein Umschalter den zumindest einen zweiten Positionssensor mit der Energieversorgung verbinden und im Energiesparmodus diesen von der Energieversorgung trennen.

Somit kann gemäß der vorliegenden Erfindung eine Verringerung des Energieverbrauchs insbesondere dadurch erreicht werden, dass sowohl der zweite Positionssensor, der für die eigentliche Positionsgebung/Drehgebung unerlässlich ist als auch eine physikalisch unabhängig ausgebildete externe Auswerteeinheit im Energiesparmodus ausgeschaltet werden.

Gemäß einer Weiterbildung sind der zumindest eine zweite Positionssensor sowie die Weckvorrichtung in einer Positionsgebereinheit angeordnet, und die Auswerteeinheit ist physikalisch von der Positionsgebereinheit verschieden und die Positionsgebereinheit und die Auswerteeinheit sind über entsprechende Schnittstellen kommunikativ miteinander verbunden. Somit können der zumindest eine zweite Positionssensor in der Positionsgebereinheit und die Auswerteeinheit, die relativ weit entfernt von der Positionsgebereinheit angeordnet sein kann, in Reaktion einer Ausgabe des Wecksignals durch die Weckvorrichtung auf Verbindung mit der Energieversorgung geschaltet werden.

Insbesondere kann die Auswerteeinheit kann eine Energieverwaltungseinrichtung umfassen, die dazu ausgebildet ist, die Auswerteeinheit und/oder den zumindest einen zweiten Positionssensor in Reaktion auf das Wecksignal, insbesondere über Steuerung eines entsprechenden Umschalters, der mit der Energieversorgung verbunden ist, einzuschalten, wodurch eine effiziente und zuverlässige Steuerung des Betriebs- bzw. Energiesparmodus in der Auswerteeinheit vorgesehen werden kann.

Die oben genannte Weckvorrichtung kann beispielhaft dazu ausgebildet sein, das Wecksignal auszugeben, wenn der zumindest eine erste Positionssensor (der einen geringeren Energieverbrauch als der zweite Positionsssensor, wenn dieser mit der Energieversorgung verbunden ist, aufweist) eine Positionsänderung und/oder Drehung des Körpers über einen vorbestimmten Wert hinaus, beispielsweise eine Drehung um einen Winkel, der größer als ein vorbestimmter Minimalwinkel ist, detektiert. So kann die Empfindlichkeit der Detektion einer nach einem Ruhezustand wieder einsetzenden Bewegung des Körpers eingestellt werden, und es kann zuverlässig ein Wechsel von dem Energiesparmodus in den Betriebsmodus, in dem der zumindest eine zweite Positionssensor mit Energie versorgt wird, durch die Weckvorrichtung in Reaktion auf ein Signal des zumindest einen ersten Positionssensors, der im Energiesparmodus mit Energie versorgt wird.

Gemäß einer weiteren Weiterbildung ist die Messvorrichtung dazu ausgebildet ist, die Auswerteeinheit und/oder den zumindest einen zweiten Positionssensor nach einer vorbestimmten Zeitdauer, in der kein Signal von der Weckvorrichtung oder von dem zumindest einen ersten Positionssensor oder von dem zumindest einen zweiten Positionssensor ausgegeben wird, auszuschalten bzw. in den Energiesparmodus überzugehen. Das Ausschalten kann durch einen entsprechenden Umschalter, der von der oben erwähnten Energieverwaltungseinrichtung geschaltet wird, erfolgen, wobei durch den Umschalter eine elektrische Verbindung mit der Energieversorgung erstellt bzw. aufgehoben wird. Dadurch, dass unter den genannten Umständen nach einer vorbestimmten Zeit der Energiesparmodus aktiviert wird, lässt sich insbesondere ein unnötiger Energieverbrauch, wenn der Körper ruht, vermeiden.

In sowohl der oben genannten Positionsgebereinheit als auch in der von dieser räumlichen getrennten Auswerteeinheit können Mikrokontroller vorgesehen sein, und die Weckvorrichtung kann dazu ausgebildet sein, den Mikrokontroller in der Positionsgebereinheit und/oder den Mikrokontroller in der Auswerteeinheit im Energiesparmodus auszuschalten, um Energie zu sparen, und im Betriebsmodus einzuschalten.

Gemäß einer Weiterbildung der erfindungsgemäßen Messvorrichtung ist die Weckvorrichtung dazu ausgebildet, das Wecksignal über eine vorbestimmte Zeitdauer als ein LOW-Pegel-Signal (Signal niedrigen Pegels) auszugeben. Hierdurch kann ein etwaiger Kabelbruch erkannt werden und somit die Zuverlässigkeit der Steuerung des Betriebs- bzw. Energiesparmodus erhöht werden. Weitere Merkmale und Vorteile der vorliegenden Erfindung werden im Weiteren mit Bezug auf die Figuren beschrieben, die lediglich beispielhafte Ausführungsformen veranschaulichen und durchaus nicht den gesamten Umfang der Erfindung darstellen. Es versteht sich, dass die gezeigten Merkmale in anderen Kombinationen, als in den Beispielen beschrieben, im Rahmen der Erfindung Verwendung finden können.
Figur 1 illustriert Komponenten eines Beispiels einer Positionsgebervorrichtung einer erfindungsgemäßen Messvorrichtung.
Figur 2 zeigt ein Blockschaltbild eines Beispiels einer Positionsgebervorrichtung und Auswerteeinheit einer erfindungsgemäßen Messvorrichtung.
Figur 3 zeigt beispielhaft Signale, die von einer Ausführungsform der Positionsgebervorrichtung der erfindungsgemäßen Messvorrichtung ausgegeben werden.

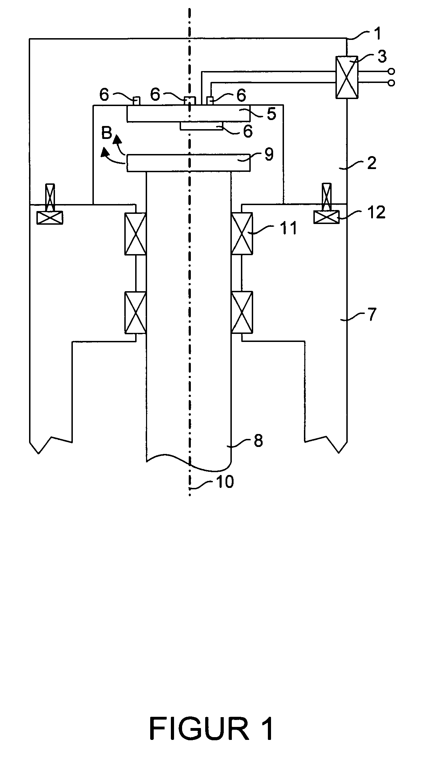

In Figur 1 ist eine Positionsgebervorrichtung 1 gemäß einem Beispiel der vorliegenden Erfindung veranschaulicht. Die Positionsgebervorrichtung 1 umfasst Gehäuseelemente 2 und 7, wobei in dem Gehäuseelement 2 eine Kabeldurchführung 3 vorgesehen ist, durch welche ein Kabel 4 geführt ist. Innerhalb des Gehäuseelements 2 ist eine Leiterplatte 5 mit einer Elektronik vorgesehen. Positionssensoren 6, wie beispielsweise hochauflösende magnetoresistive Sensoren, dienen der Detektion des Drehwinkels der Welle 8, 10, die einen Permanentmagneten 9 umfasst. Die Welle 8, 10 ist durch eine Lagerung 11 gelagert, welche mithilfe einer Lagerbefestigung 12 an dem Gehäuseelement 2 befestigt ist.

Die Elektronik der Leiterplatte 5 ist eine Niederenergieelektronik (Low-Power-Elektronik) und die Positionssensoren 6 sind teilweise ebenfalls für einen Betrieb bei niedriger elektrischer Leistung ausgelegt und umfassen beispielsweise Hall-Sensoren, Reed-Kontakte oder Wiegand-Drähte. Zudem umfassen die Positionssensoren 6 höher auflösende Sensoren, wie magnetoresistive Sensoren, die einen höheren Energieverbrauch als die Hall-Sensoren, Reed-Kontakte oder Wiegand-Drähte aufweisen. Die dauerbestromte (permanent elektrisch versorgte) Elektronik der Leiterplatte 5 umfasst eine Weckvorrichtung und einen Low-Power-Umschalter (z.B. einen FET, Reed-Schalter oder ein Relais). Die Energieversorgung der Positionsgebervorrichtung 1 erfolgt durch eine Auswerteeinheit (in Figur 1 nicht gezeigt) oder eine Energiequelle (in Figur 1 nicht gezeigt), wie beispielsweise durch eine Batterie oder einen Akkumulator. Dies Energiequelle kann extern oder intern vorgesehen sein. Im letzteren Fall kann sie auch insbesondere durch eine Generatoreinrichtung ausgebildet sein.

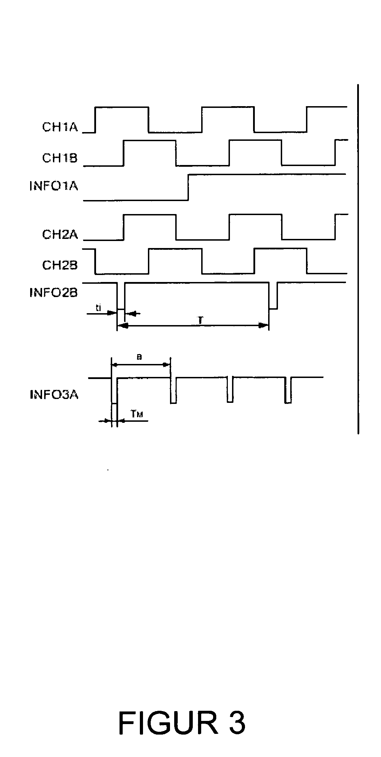

Wenn die Welle 8, 10 sich nicht bewegt, ist die Positionsgebervorrichtung 1 in einen Energiesparmodus geschaltet. Bei einer neu einsetzenden Bewegung der Welle 8, 10, während sich die Positionsgebervorrichtung 1 in dem Energiesparmodus befindet, generiert die Weckvorrichtung in Abhängigkeit von Signalen der Hall-Sensoren/Reed-Kontakte bzw. um Wiegand-Drähte vorgesehene Spulen ein Schaltsignal (Wecksignal). Beispielsweise kann die Weckvorrichtung so eingerichtet sein, dass sie bei Detektion einer Drehung der Welle 8, 10 um mehr als einen vorbestimmten Minimalwinkel, z.B. bei Detektion einer Drehung der Welle 8, 10 von mehr als einer halben Umdrehung, das Schaltsignal generiert. Die Dauer des Schaltsignals (Tm in Figur 3) ist ebenfalls vorbestimmt, und das Schaltsignal ist vorzugsweise LOW aktiv (niedriger Signalpegel) zur Erkennung eines möglichen Kabelbruchs (siehe wiederum Figur 3). Das Schaltsignal wird der Auswerteeinheit eingegeben, welche dieses Signal auswertet und entsprechend eine Vorrichtung zur Energieverwaltung, sei sie innerhalb der Auswerteeinheit oder außerhalb derselben vorgesehen, steuert.

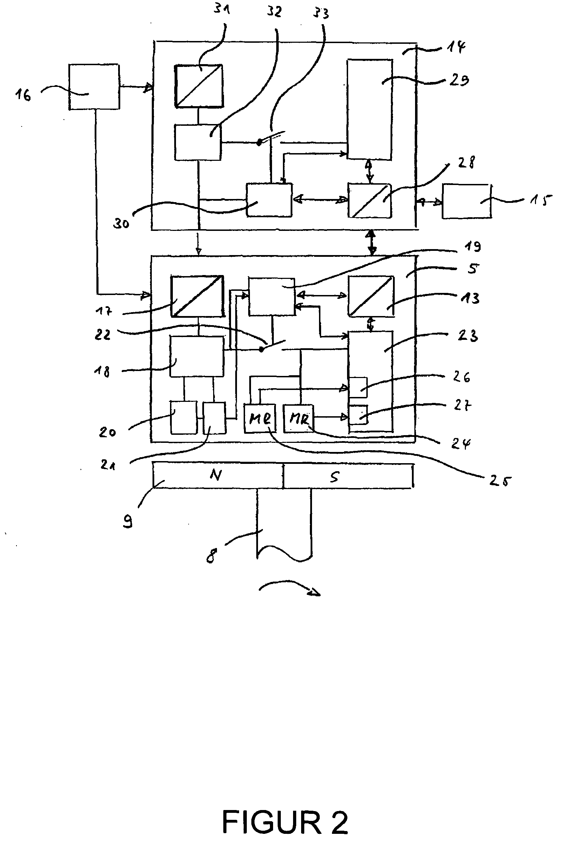

Wie es in Figur 2 gezeigt ist, ist gemäß einem Beispiel der Erfindung die Elektronik der Leiterplatte 5 der Positionsgebervorrichtung 1 über eine Schnittstelle 13 mit einer Auswerteeinheit 14 verbunden. In dem gezeigten Beispiel umfasst die Elektronik der Leiterplatte 5 einen Versorgungseingang 17, eine Spannungsversorgung 18, eine Weckvorrichtung 19, Hallsensoren 20 und 21, einen Umschalter 22, einen Mikrokontroller 23 und hochauflösende magnetoresistive Positionssensoren 24 sowie AD-Wandler 26 und 27. Eine externe Energiequelle 16 versorgt in dem gezeigten Beispiel sowohl die Auswerteeinheit 14 als auch die Elektronik der Leiterplatte 5 über einen Versorgungseingang 31 der Auswerteeinheit 14 bzw. über den Versorgungseingang 17 mit elektrischer Energie. Die gezeigte Auswerteeinheit 14 umfasst eine Schnittstelle 28 zur Kommunikation mit der Elektronik der Leiterplatte 5 der Positionsgebervorrichtung 1 über die Schnittstelle 13. In der Auswerteeinheit 14 sind ein Mikrokontroller 29, eine Vorrichtung zur Energieverwaltung 30, eine Spannungsversorgung 32, die mit dem Versorgungseingang 31 verbunden ist, und ein Umschalter 33 vorgesehen.

Die Positionsgebervorrichtung 1 gibt an die Auswerteeinheit 14 inkrementelle Positionssignale CH1A, CH1 B, CHA2 und CH2B aus, wie es in Figur 3 gezeigt ist. Des weiteren gibt die Positionsgebervorrichtung 1 erfindungsgemäß ein Wecksignal INF03A sowie Funktionskontrollsignale INFO1A und INF02B aus. Wenn die Welle 8, 10 ruht, liegt das Wecksignal INFO3A auf dem Pegel HIGH. Dreht sich die Welle aus dem Ruhezustand mindestens um einen vorbestimmten Winkel, so wechselt das Wecksignal INF03A für die vorbestimmte Zeitdauer Tm auf den Pegel LOW.

Die in Figur 2 gezeigte Auswerteeinheit 14 umfasst zum einen einen Low-Power-Elektronik-Teil, dessen Schaltungsteile dauernd bestromt sind. Andere Teile dieser Elektronik beispielsweise mit dem Mikroprozessor zu Signalverarbeitung und zur Steuerung und Kommunikation mit einer übergeordneten Steuerung 15 sind nur bei Bedarf in Funktion und können in Abhängigkeit von der Betriebssituation, insbesondere bei ruhender Welle 8, 10, abgeschaltet oder in einen Energiesparmodus versetzt werden.

Wenn die Auswerteeinheit 14 vollständig eingeschaltet ist, wird diese nach einer vorbestimmten Zeit, z.B. nach 20 Minuten, zumindest teilweise ausgeschaltet, wenn über eine vorbestimmte Zeitdauer kein (LOW-) Signal von der Weckvorrichtung 19 oder von der Positionsgebervorrichtung 1 aufgrund von Signalen der Hallsensoren 20, 21 oder der Positionssensoren 24 oder von einem übergeordneten Leitsystem eingegangen sind. Ist die Auswerteeinheit 14 zumindest zum Teil ausgeschaltet, d.h. befindet sie sich in einem Energiesparmodus, so wird sie vollständig eingeschaltet, also aus dem Energiesparmodus in einen Betriebsmodus geschaltet, sofern ein Wecksignal von der Weckvorrichtung 19 der Positionsgebervorrichtung 1 eingeht.

Im Detail steuert die Weckvorrichtung 19 der Positionsgebervorrichtung 1 den Umschalter 22 der Positionsgebervorrichtung 1 und gegebenenfalls auch den Mikrokontroller 23 der Positionsgebervorrichtung 1 an und sorgt dadurch für ein vollständiges Einschalten der Positionsgebervorrichtung 1 bzw. für einen Wechsel aus einem Energiesparmodus in einen Betriebsmodus. Zugleich gibt die Weckvorrichtung 19 über die Schnittstelle 13 der Positionsgebervorrichtung 1 ein Schaltsignal an den Umschalter 33 der Auswerteeinheit 14 und gegebenenfalls auch den Mikrokontroller 29 der Auswerteeinheit 14 aus und sorgt somit für ein vollständiges Einschalten der Auswerteeinheit 14 bzw. für einen Wechsel derselben von einem Energiesparmodus in einen Betriebsmodus. Die Weckvorrichtung gibt in Reaktion auf ein Signal von zumindest einem mit geringer Energie betreibbaren Hallsensor 20 und 21, das anzeigt, dass sich die Welle aus der Ruhelage herausbewegt, ein Wecksignal aus.

Wenn die Positionsgebervorrichtung 1 infolge des Wecksignals in den Betriebsmodus gewechselt ist, dann werden die hochauflösenden Positionssensoren 24, die signifikant mehr Energie benötigen als die Hallsensoren 20 und 21 über den Umschalter 22 eingeschaltet. Gemäß der hier offenbarten Erfindung wird somit der Energieverbrauch der Positionsgebervorrichtung 1 insbesondere dahingehend gegenüber dem Stand der Technik verringert, dass in einem Energiesparmodus lediglich niederverbrauchende Hall-Sensoren, Reed-Kontakte oder Wiegand-Drähte betrieben werden und hochauflösende Positionssensoren 24, die der genauen Drehgebung dienen, ausgeschaltet sind, und letztere erst nach einem Wechsel der Positionsgebervorrichtung 1 in den Betriebsmodus Strom verbrauchen.

## Patentansprüche

1. Messvorrichtung zur Ermittlung der Position und/oder des Drehwinkels eines Körpers, der eine Translations- und/oder Rotationsbewegung ausführt, und die sich in einem Energiesparmodus oder einem Betriebsmodus befinden kann; umfassend
eine Energieversorgung;
zumindest einen ersten Positionssensor, der in dem Energiesparmodus von der Energieversorgung versorgt wird und der dazu ausgebildet ist, in dem Energiesparmodus in Reaktion auf eine Detektion einer Positionsänderung und/oder Drehung des Körpers ein Signal auszugeben;
zumindest einen zweiten Positionssensor mit höherem Auflösungsvermögen und Energieverbrauch als demjenigen des zumindest einen ersten Positionssensors und eine Auswerteeinheit zum Auswerten von Signalen des zumindest einen zweiten Positionssensors, und wobei der zweite Positionssensor und, zumindest teilweise, die Auswerteeinheit im Energiesparmodus nicht von der Energieversorgung versorgt werden; und
eine Weckvorrichtung, die dazu ausgebildet ist, das von dem zumindest einen ersten Positionssensor ausgegebene Signal zu empfangen und in Reaktion darauf ein Wecksignal auszugeben, das zu einem Schalten der Messvorrichtung von dem Energiesparmodus in den Betriebsmodus führt.

2. Die Messvorrichtung gemäß Anspruch 1, in der die Energieversorgung extern vorgesehen ist.

3. Die Messvorrichtung gemäß Anspruch 1, in der die Energieversorgung intern und in Form einer Generatoreinrichtung vorgesehen ist.

4. Die Messvorrichtung gemäß einem der Ansprüche 1 bis 3, in der im Betriebsmodus der zumindest eine zweite Positionssensor und die gesamte Auswerteeinheit durch die Energieversorgung mit Energie versorgt werden.

5. Die Messvorrichtung gemäß einem der Ansprüche 1 bis 3, in der der zumindest eine erste und der zumindest eine zweite Positionssensor sowie die Weckvorrichtung in einer Positionsgebereinheit angeordnet sind und die Auswerteeinheit physikalisch von der Positionsgebereinheit verschieden ist und die Positionsgebereinheit und die Auswerteeinheit über Schnittstellen kommunikativ verbunden sind.

6. Die Messvorrichtung gemäß einem der vorhergehenden Ansprüche, in der die Auswerteeinheit und/oder der zumindest eine zweite Positionssensor durch das Wecksignal angeschaltet werden.

7. Die Messvorrichtung gemäß Anspruch 6, in der die Auswerteeinheit eine Energieverwaltungseinrichtung umfasst, die dazu ausgebildet ist, die Auswerteeinheit und/oder den zumindest einen zweiten Positionssensor in Reaktion auf das Wecksignal, insbesondere über Steuerung eines entsprechenden Umschalters, der mit der Energieversorgung verbunden ist, einzuschalten.

8. Die Messvorrichtung gemäß einem der vorhergehenden Ansprüche, in der die Weckvorrichtung dazu ausgebildet ist, das Wecksignal auszugeben, wenn der zumindest eine erste Positionssensor eine Positionsänderung und/oder Drehung des Körpers über einen vorbestimmten Wert hinaus detektiert.

9. Die Messvorrichtung gemäß einem der Ansprüche 4 bis 8, die dazu ausgebildet ist, die Auswerteeinheit und/oder den zumindest einen zweiten Positionssensor nach einer vorbestimmten Zeitdauer, in der kein Signal von der Weckvorrichtung oder von dem zumindest einen ersten Positionssensor oder von dem zumindest einen zweiten Positionssensor ausgegeben wird, auszuschalten bzw. in den Energiesparmodus überzugehen.

10. Die Messvorrichtung gemäß einem der Ansprüche 4 bis 9, in der die Positionsgebereinheit einen Mikrokontroller umfasst, und wobei die Weckvorrichtung dazu ausgebildet ist, den Mikrokontroller im Energiesparmodus auszuschalten und im Betriebsmodus einzuschalten.

11. Die Messvorrichtung gemäß Anspruch 7, in dem die Auswerteeinheit einen Mikrokontroller umfasst und die Energieverwaltungseinrichtung dazu ausgebildet ist, den Mikrokontroller im Energiesparmodus auszuschalten und in Reaktion auf das Wecksignal einzuschalten.

12. Die Messvorrichtung gemäß einem der vorhergehenden Ansprüche, in der der zumindest eine erste Positionssensor einen Reed-Kontakt, einen Hall-Sensor oder einen Wiegand-Draht umfasst.

13. Die Messvorrichtung gemäß einem der vorhergehenden Ansprüche, in der der zumindest eine erste Positionssensor einen optischen, kapazitiven oder induktiven Sensor umfasst und/oder der zumindest eine zweite Positionssensor einen magnetoresistiven Sensor, einen optischen, kapazitiven oder induktiven Sensor umfasst.

14. Die Messvorrichtung gemäß einem der vorhergehenden Ansprüche, in der die Energieversorgung physikalisch außerhalb der Auswerteeinheit und der Positionsgebereinheit und mit diesen elektrisch verbunden vorgesehen ist.

15. Die Messvorrichtung gemäß einem der vorhergehenden Ansprüche, in der die Weckvorrichtung dazu ausgebildet ist, das Wecksignal über eine vorbestimmte Zeitdauer als ein LOW-Pegel-Signal auszugeben.
